Europäisches Patentamt

European Patent Office

Office européen des brevets

(11) Numéro de publication: **0 148 050 B1**

(12) **FASCICULE DE BREVET EUROPEEN**

(45) Date de publication de fascicule du brevet:
04.09.91

(51) Int. Cl.⁵: **C08G 14/08**, C08J 5/24,
//C08L61/34

(21) Numéro de dépôt: 84402422.4

(22) Date de dépôt: 28.11.84

Le dossier contient des informations techniques présentées postérieurement au dépôt de la demande et ne figurant pas dans le présent fascicule.

(54) **Résine pour une composition d'encollage, son procédé de fabrication et la composition d'encollage obtenue.**

(30) Priorité: 29.11.83 FR 8319017

(43) Date de publication de la demande:
10.07.85 Bulletin 85/28

(45) Mention de la délivrance du brevet:
04.09.91 Bulletin 91/36

(84) Etats contractants désignés:
AT BE CH DE FR GB IT LI LU NL SE

(56) Documents cités:
FR-A- 2 228 803
FR-A- 2 251 585
GB-A- 986 193

CHEMICAL ABSTRACTS, vol. 90, no. 8, février 1979, page 32, résumé no. 55722a, Colum-bus, Ohio, US; & PL - A - 96 846 (INSTYTUT ODLEWNICTWA; INSTYTUT CHEMII PRZE-MYSLOWEJ) 31-07-1978

(73) Titulaire: **ISOVER SAINT-GOBAIN
Les Miroirs 18, avenue d'Alsace
F-92400 Courbevoie(FR)**

(72) Inventeur: **Fugier, Roger
90 avenue Pierre Curie
F-60290 Rantigny(FR)**
Inventeur: **de Goys de Mezeyrac, Charles
34 allée du bois de Graville
F-91190 Gives sur Yvette(FR)**
Inventeur: **Decagny, Michel
56 rue Pierre Vienot
F-60600 Clermont(FR)**
Inventeur: **Joachim, Jacky
505 Howellvil road
Berwyn PA 19312(US)**

(74) Mandataire: **Muller, René et al
SAINT-GOBAIN RECHERCHE 39, quai Lucien Lefranc
F-93304 Aubervilliers(FR)**

## Description

La présente invention a trait à la fabrication de produits à base de fibres minérales, et notamment de produits isolants, sous forme de feutres ou de voiles de fibres. Le procédé de fabrication mis en oeuvre implique le dépôt sur les fibres, par pulvérisation ou tout autre moyen, d'un encollage à base de phénoplastes ou d'aminoplastes, assurant ainsi la liaison des fibres.

L'invention concerne un nouveau produit de condensation ou résine destiné à entrer dans une composition d'encollage du type décrit ci-dessus, un procédé de fabrication dudit produit et une composition d'encollage comprenant ledit produit.

On entend par résine, au sens de l'invention, le produit resultant de la condensation des réactifs de départ en présence d'un catalyseur, avant toute étape de cuisson dans une étuve.

Les propriétés recherchées pour les compositions d'encollage sont largement dépendantes des caractéristiques de la résine de base. Une bonne composition d'encollage doit présenter avant tout une bonne aptitude à la pulvérisation, ainsi que des propriétés d'enrobage et de liage des fibres, et simultanément être peu polluante.

A cette fin, la résine de base doit présenter une bonne stabilité dans le temps et une diluabilité à l'eau élevée. La notion de diluabilité étant particulièrement importante, elle sera définie, au sens de l'invention, de la façon suivante : la diluabilité à l'eau d'une solution de résine est le volume d'eau désionisée que l'on peut, à une température donnée, ajouter à l'unité de volume de cette solution avant de provoquer la formation d'un trouble permanent.

Par ailleurs, il est également nécessaire que la résine de base soit aussi exempte que possible de produits de départ non transformés. En effet, les risques de pollution atmosphérique sont essentiellement dus à la présence de monomères volatils : ce sont par exemple les produits de départ nécessaires à l'obtention de la résine, par exemple du formaldéhyde et du phénol, non transformés lors de la réaction, ou régénérés au cours de l'encollage des fibres ou ultérieurement.

Par conséquent, pour obtenir des encollages où la teneur en générateurs de pollution, notamment en phénol libre et en formaldéhyde libre, est aussi réduite que possible, il faut que la résine de base présente le moins possible de produits de départ résiduels tout en conservant ses qualités d'emploi.

Les premières résines proposées étaient obtenues à partir de phénol et de formaldéhyde dans un rapport molaire F/P inférieur à 2,5, de l'urée étant alors introduite uniquement avec les autres additifs d'encollage, après formation et stockage de la résine, afin de capter le formaldéhyde libre. A cause du faible rapport molaire du formaldéhyde au phénol (F/P), on n'obtient pas un taux de phénol libre inférieur à 1,5 % du poids total de la solution de résine, et le taux de formaldéhyde libre est lui-même au moins égal à 6 %. De plus, même en introduisant dans l'encollage une forte quantité d'urée, afin de réduire ce taux de formaldéhyde libre, on ne parvient pas à contrôler sa valeur.

On a alors proposé diverses méthodes allant dans le sens d'une réduction du taux de monomères libres volatils présents dans une composition d'encollage à base d'une résine phénoplaste. Le principe des méthodes suggérées repose sur l'idée d'augmenter le rapport molaire initial du formaldéhyde au phénol (F/P) pour abaisser le taux de phénol non combiné, et par conséquent libre, et, parallèlement, de capter le formaldéhyde libre à son tour en excès, par des composés azotés, notamment de l'urée.

Différentes formulations de résines de base, obtenues à partir d'un rapport molaire du formaldéhyde au phénol compris entre 2,7 et 4,2 et en présence d'un catalyseur basique, ont été envisagées.

On a par exemple proposé dans le brevet américain US 3 616 179 un produit de condensation de phénol, de formaldéhyde et d'urée. Le produit obtenu présente une diluabilité satisfaisante, mais, à cause du procédé de préparation mis en oeuvre, on ne peut parvenir à un taux de phénol libre non combiné très bas tout en conservant une diluabilité satisfaisante. L'urée est introduite dans le réacteur où a lieu la réaction du phénol avec le formaldéhyde à une température correspondant au palier de cette réaction, qui est de l'ordre de 70°C. Pour éviter une polymérisation trop poussée, qui risque de provoquer des problèmes de prégélification rendant les encollages inaptes à la pulvérisation, on bloque la réaction du phénol avec le formaldéhyde avant que pratiquement tout le phénol ait réagi.

Il a aussi été proposé dans les brevets US 3 684 467 et US 4 014 726 de préparer un produit de condensation de phénol formaldéhyde, dextrine ou dicyandiamide et urée. Pour l'obtention de ce produit, un premier type de capteur de formaldéhyde (dextrine ou dicyandiamide), est introduit et réagit à une température correspondant au palier de la réaction du phénol et du formaldéhyde, et l'urée est introduite et réagit tout de suite après le début du refroidissement du milieu réaction-nel.

Outre les inconvénients déjà mentionnés de transformation incomplète du phénol, cette solution impose la présence de deux capteurs de formaldéhyde. De plus, les cycles de températures sont très longs et exigent une durée correspondant à plus d'un poste.

On connait également, par la publication de brevet français FR-A-2 251 585, un produit de condensation, en présence d'un catalyseur basique, de phénol, formaldéhyde et urée, destiné à entrer dans une composition d'encollage pour fibres minérales, qui est liquide et présente un taux de phénol libre, exprimé en poids total de liquide, inférieur à 0,5 %.

Toutefois, aucune des solutions proposées n'a jamais fourni de résine qui contienne peu de phénol libre et de formaldéhyde libre, afin de limiter les problèmes de pollution, tout en conservant les propriétés caractéristiques d'une résine destinée à entrer dans une composition d'encollage, et notamment une diluabilité et une stabilité élevées.

La présente invention vise à pallier les inconvénients précités en fournissant une nouvelle résine convenant pour entrer dans une composition d'encollage.

Elle a également pour objet de fournir un procédé de préparation de ladite résine qui permet d'obtenir une résine présentant des caractéristiques d'emploi améliorées, et d'obtenir ultérieurement un encollage plus efficace, le procédé de préparation de la résine selon l'invention comprenant avantageusement des moyens simplifiés de mise en oeuvre, comme un cycle de réaction plus court, et l'utilisation d'un seul type de monomère pour fixer le formaldéhyde en excès.

L'invention concerne également une composition d'encollage à base de la résine selon l'invention.

La résine selon l'invention est une résine sous forme liquide, destinée à être utilisée dans une composition d'encollage pour fibres minérales, constituée essentiellement de condensats de phénol-formaldéhyde et d'urée-formaldéhyde, présentant un taux de phénol libre et de formaldéhyde libre respectivement inférieur à 0,5 % et 3 %, une diluabilité à l'eau, mesurée à 20° C, au moins égale à 1000 % et une teneur en extrait sec au moins égale à 40 %, cette résine résultant de la condensation de formaldéhyde et de phénol utilisés dans un rapport molaire compris entre 3 et 6, en présence d'un catalyseur basique en quantité correspondant à 12 à 20 moles $OH^-$ pour 100 moles de phénol initial, à une température comprise entre 60° C et 75° C, de préférence à 70° C environ, jusqu'à l'obtention d'un taux de conversion du phénol supérieur à 98 %, et au plus pendant une durée n'excédant pas 90 mn, puis du refroidissement du milieu réactionnel à une vitesse de l'ordre de 1° C/mn jusqu'à 35° C environ, et de la condensation du formaldéhyde en excès avec de l'urée ajoutée en quantité telle que le rapport molaire U/P soit compris entre (F/P - 2,55) / 2,6 et (F/P - 2,55) / 0,7 et de préférence entre (F/P - 2,55) / 1,8 et (F/P - 2,55)/ 0,8, l'introduction de l'urée ayant lieu progressivement, au cours du refroidissement, en une durée au moins égale à la moitié de la durée du refroidissement du milieu réactionnel.

De préférence, le taux de phénol libre est inférieur à 0,4 %, le taux de formaldéhyde libre est inférieur à 0,3 % et la diluabilité à l'eau mesurée à 20° C est au moins égale à 2000 %.

Par ailleurs, l'invention propose un procédé de préparation de ladite résine.

Le procédé selon l'invention, et un procédé pour la préparation d'une résine sous forme liquide, destinée à être utilisée dans une composition d'encollage pour fibres minérales, constituée essentiellement de condensats de phénol-formaldéhyde et d'urée-formal présentant un taux de phénol libre et de formaldéhyde libre exprimé en poids total de liquide, respectivement inférieur à 0,5 % et à 3 %, une diluabilité à l'eau, mesurée à 20° C, au moins égale à 1000 % et une teneur en extrait sec au moins égale à 40 %, ce procédé consistant à faire réagir du formol et du phénol dans un rapport molaire compris entre 3 et 6, en présence d'un catalyseur basique utilisé en quantité correspondant à 12 à 20 moles $OH^-$ pour 100 moles de phénol initial, à une température comprise entre 60° C et 75° C, de préférence à 70° C environ jusqu'à l'obtention d'un taux de conversion du phénol supérieur à 98 %, et au plus pendant une durée n'excédant pas 90 mn, puis à refroidir le milieu réactionnel à une vitesse de l'ordre de 1° C/mn jusqu'à 35° C environ, et à faire réagir le formaldéhyde en excès avec de l'urée ajoutée en quantité telle que le rapport molaire U/P soit compris entre (F/P - 2,55) / 2,6 et (F/P - 2,55) /0,7 et de préférence entre (F/P - 2,55) / 1,8 et (F/P - 2,55) / 0,8, l'introduction de l'urée ayant lieu progressivement, au cours du refroidissement, en une durée au moins égale à la moitié de la durée du refroidissement du milieu réactionnel.

A une température inférieure à 60° C, la réaction est trop lente pour une application industrielle, et à une température supérieure à 75° C, le taux de phénol libre est trop élevé.

Le choix de la quantité d'urée présente dans la résine est dépendant d'exigences contradictoires : pour être certain de fixer la plus grande quantité possible de formaldéhyde libre, il conviendrait d'introduire un large excès d'urée par rapport aux conditions stoechiométriques. Mais on a constaté que de l'urée introduite en trop grande quantité au dessus d'un certain seuil du rapport molaire U/P, ne sert plus à capter le formaldéhyde libre.

La quantité importante de catalyseur favorise la réaction du phénol avec le formaldéhyde et permet également une diminution de la durée du palier de température, sans que les caractéristiques d'emploi du produit final, et notamment sa diluabilité, en soient affectées. Elle ne doit cependant pas être trop importante, afin d'éviter une réaction trop violente et la formation de produits indésirables, en particulier insolubles.

Le catalyseur employé peut être un hydroxyde quelconque d'un métal alcalin ou alcalino terreux. On peut citer par exemple la chaux, l'hydroxyde de baryum ou l'un de ses hydrates, mais on utilisera avantageusement la potasse ou la soude, et de préférence la soude à raison de 5 à 8,5 % en poids de phénol initial.

Suivant une forme préférée de l'invention, on introduit l'urée dès le début du refroidissement.

La préparation de la résine a lieu selon un cycle de température qui se divise schématiquement en trois phases : une phase de chauffage, un palier de température et une phase de refroidissement. Grâce au procédé selon l'invention, le cycle est très rapide, ce qui, par rapport aux cycles décrits dans l'art antérieur, procure des avantages tant du point de vue économique que technologique. Notamment, la durée totale du cycle, entre le chargement du réacteur et l'obtention de la résine, n'excède pas 7 heures, à l'échelle industrielle, le palier de température étant lui-même limité à 90 minutes environ.

Suivant une variante du procédé selon l'invention, il est possible de lui ajouter une étape de neutralisation, jusqu'à un pH de 7 à 7,5 environ.

Enfin, l'invention concerne une composition d'encollage destinée à l'enrobage de fibres minérales, par exemple des fibres de verre, notamment par pulvérisation, qui comprend la résine selon l'invention, de l'urée supplémentaire et des additifs d'encollage.

Les additifs d'encollage couramment employés sont du silane et des huiles minérales, l'ammoniaque et le sulfate d'ammonium.

Suivant une caractéristique de la composition d'encollage selon l'invention, les proportions du produit de condensation compté en parts de matière sèche, et de l'urée supplémentaire sont comprises entre 65 parts du produit de condensation pour 35 parts d'urée supplémentaire et 90 parts pour 10 parts, de préférence 80 parts pour 20 parts.

D'autres caractéristiques et avantages de l'invention apparaîtront au cours de la description détaillée suivante d'un mode de réalisation de l'invention, assortie d'exemples. Certains exemples sont conformes à l'invention, et d'autres sont cites à titre comparatif.

Tous les exemples décrits se rapportent à un même mode opératoire, qui sera détaillé ultérieurement.

Sauf indication contraire, les pourcentages sont des pourcentages en poids, exprimés soit par rapport au poids de phénol introduit, soit par rapport au poids total de liquide présent dans le milieu réactionnel.

Les résultats obtenus pour les différents exemples mis en oeuvre seront comparés en ce qui concerne les points suivants concernant la résine :
- aspect : limpide, laiteux,
- diluabilité,
- taux de formaldéhyde libre final, par rapport au poids total de liquide ($Fl_f$),
- taux de phénol libre final, par rapport au poids total de liquide ($Pl_f$),
- teneur en extrait sec : pour la déterminer, on expose pendant 2 heures à 150°C dans une étuve ventilée 2 g de résine dans 10 cm³ d'eau dans une coupelle de diamètre 50 mm et de hauteur 20 mm (extrait sec %),
- taux de conversion du phénol : c'est le pourcentage de phénol ayant participé à la réaction de condensation par rapport à 100 % de phénol initial (Pc),
- taux de conversion du formaldéhyde : c'est le pourcentage de formaldéhyde ayant participé aux réactions avec le phénol et avec l'urée, par rapport à 100 % de formaldéhyde initial (Fc),
- pH.

Pour obtenir la résine, on procède de la façon suivante : on introduit du formaldéhyde et du phénol dans un réacteur ; puis sous agitation mécanique, on chauffe ou on refroidit jusqu'à atteindre une température un peu supérieure à la température de fusion du phénol. On poursuit l'agitation mécanique pendant toute la durée du cycle réactionnel. On introduit le catalyseur de façon régulière puis, immédiatement après la fin de cette introduction, on élève la température du mélange jusqu'à une valeur permettant une condensation optimale et l'obtention d'une résine diluable. On maintient cette température jusqu'à ce que le taux de conversion du phénol soit supérieur à 98 %.

On commence alors à refroidir le réacteur et le milieu réactionnel et on introduit l'urée. Pour son stockage, la résine est avantageusement maintenue sous faible agitation à une température de 16°C environ. Elle peut être stockée pendant au moins 15 jours.

Pour obtenir la composition d'encollage, on ajoute de l'urée supplémentaire et les additifs usuels intervenant dans une formulation d'encollage.

Toutes les données et résultats caractéristiques des exemples décrits sont regroupés dans les tableaux 1 et 2 ci-joint ; elles sont relatives d'une part aux proportions respectives des divers réactifs à différents

4

stades du procédé et à différentes caractéristiques du procédé (tableau 1) et d'autre part, aux caractéristiques des résines obtenues (tableau 2).

Les données relatives aux proportions respectives des divers réactifs sont les rapports molaires :
.  du formaldéhyde au phénol (F/P),
.  de l'urée au phénol initial (U/P),
.  de l'urée au formaldéhyde libre au moment de l'introduction de l'urée (U/F$_l$ à tU).

Les autres données indiquées sont le pourcentage de catalyseur par rapport au phénol initial (catalyseur %), le nombre de moles d'OH$^-$ pour 100 moles de phénol initial (%OH-/P), le moment d'introduction de l'urée (tU), le taux de formaldéhyde libre par rapport au liquide réactionnel, au moment de l'introduction de l'urée (F$_l$ à tu).

Les exemples 1 à 6 entrent dans le cadre de l'invention. Les exemples 7 à 11 sont décrits à titre comparatif et ne sont pas objets de l'invention.

## Exemple 1

Dans un réacteur de deux litres équipé d'un système d'agitation, d'un condenseur, d'un thermomètre et d'une entrée pour réactifs, on ajoute 282,3 g de phénol (3 moles) à 852 g (10,5 moles) de formaldéhyde en solution aqueuse à 37 %. La température est régulée à l'aide d'un bain-marie muni de résistances chauffantes, commandées manuellement ou par thermomètre à contact, ainsi que d'un système de refroidissement.

Le prémélange est porté à 45°C sous agitation, puis on introduit régulièrement en 30 minutes, en maintenant la température à 45°C, 33,88 g de soude en solution aqueuse à 50 % (soit 0,4235 mole, et 6 % en poids de phénol initial).

On élève ensuite la température de façon régulière de 45 à 70°C en 30 minutes et on la maintient à 70°C.

On commence à refroidir et à introduire de l'urée en grains après environ 71 minutes de palier à 70°C, alors que la teneur en formaldéhyde libre atteint 8,4 %.

On refroidit régulièrement de 70 à 50°C en 20 minutes, tout en introduisant très régulièrement 211,8 g soit 3,528 mole d'urée en grains, soit en moyenne 10,59 g d'urée par minute. On continue de refroidir à la même vitesse jusqu'à 35°C.

La solution de résine obtenue a un aspect limpide jaune pâle. Le taux de phénol converti est de 98,1 %, le taux de formol converti de 98,5 %. L'extrait sec est de 44,3 % et la diluabilité de la résine est infinie.

## Exemple 2

On utilise le même appareillage que celui décrit pour l'exemple 1. On ajoute 254,6 g (2,7 mole) de phénol à 881,3 g (10,8 mole) de formaldéhyde à 37 %. On introduit 30,49 g de soude en solution aqueuse à 50 %, soit 0,381 mole et 6 % en poids du phénol initial. On procède ensuite comme dans l'exemple 1, mais on maintient cette fois le palier de température à 70°C pendant 90 minutes. On abaisse alors la température du milieu réactionnel à 60°C en 8 minutes, de façon à atteindre un taux de formaldhéyde libre de 10,4 %. Puis, on continue à abaisser régulièrement la température de 60 à 35°C en 20 minutes tout en introduisant de façon régulière 270,6 g d'urée en grains.

## Exemple 3

Les conditions sont analogues à celles de l'exemple 1, on modifie simplement la quantité de catalyseur, qui s'élève alors à 8 % de soude, ou 18,9 % d'équivalent en ions hydroxyles.

## Exemple 4

On modifie U/P par rapport à l'exemple 1 tout en restant dans le cadre de l'invention. Du fait d'un rapport U/P abaissé, le taux de formol libre final est un peu augmenté.

## Exemple 5

C'est une autre variante de l'invention dans laquelle on modifie à nouveau le rapport U/P.

## Exemple 6

On augmente le rapport F/P et la quantité de catalyseur. On atteint pratiquement 100 % de phénol converti ainsi que une valeur très basse du taux de phénol libre. Après avoir refroidi le milieu réactionnel jusqu'à 35°C, on procède à sa neutralisation en 90 minutes environ pour obtenir un pH de 7,3 à l'aide d'acide sulfurique en solution à 15 %. Cette neutralisation nécessite 120 g d'acide environ.

Toutes les résines obtenues selon les exemples 1 à 6 sont stables pendant 15 jours.

EXEMPLES COMPARATIFS

Exemple 7

On introduit le formaldéhyde et le phénol dans le même rapport F/P de 3,5 que dans l'exemple 1, avec la même quantité de catalyseur. Mais on n'introduit pas d'urée dans le réacteur. Il apparaît une augmentation du taux de formaldéhyde libre dans la résine finale, jusqu'à une valeur excessive pour l'emploi de la résine dans une composition d'encollage.

Exemple 8

On abaisse le rapport F/P jusqu'à une valeur inférieure à 3, et on n'introduit pas d'urée. La résine obtenue ne répond à aucune des caractéristiques souhaitées, en particulier le taux de phénol libre final est de 3,5 % et le taux de formaldéhyde libre final est de 3,2%.

Exemple 9

Par rapport à l'exemple 1, on augmente le rapport F/P jusqu'à la valeur 6 et on n'introduit pas d'urée. On observe alors un taux de formol converti insuffisant, qui correspond à un taux de formol libre excessif.

Exemple 10

On reprend des conditions analogues à celles de l'exemple 7 en remplaçant la soude par de l'hydroxyde de baryum, introduit à raison de 16 % en poids de phénol, soit 9,2 % d'équivalents en ions hydroxyles. L'emploi de ce catalyseur donne à la résine un aspect laiteux, indépendamment des autres propriétés insatisfaisantes de l'exemple 7.

Exemple 11

On reprend les mêmes conditions que dans l'exemple 1 en commençant à introduire l'urée sur le palier de température de la réaction du phénol avec le formaldéhyde, à 70°C, après 78 minutes de palier, et cette température est maintenue pendant 10 minutes environ. On refroidit alors le milieu réactionnel, jusqu'à 35°C en continuant à introduire l'urée pendant 10 minutes lors du refroidissement. Il apparaît une baisse sensible du taux de conversion du phénol, et on obtient une valeur trop forte (0,8 %) de phénol libre final.

Après avoir préparé la résine, et l'avoir stockée selon les besoins, on procède à la préparation de l'encollage en ajoutant à la résine de l'urée supplémentaire et des additifs d'encollage. L'urée supplémentaire introduite dans l'encollage sert à capter le formaldéhyde qui est susceptible d'être généré lors de la pulvérisation de l'encollage sur les fibres, ou lors de la cuisson à haute température du liant pour lier les fibres.

Une composition d'encollage typique comprend les additifs suivants :
- 1 à 3 parts de sulfate d'ammonium servant de catalyseur lors de la cuisson ultérieure de l'encollage après sa pulvérisation sur les fibres ;
- 0,1 à 1 part de silane ;
- 1 à 15 parts d'huiles minérales ;
- 6 à 12 parts d'ammoniaque, en solution à 20 %, servant à retarder la prégélification de l'encollage, et donc permettant de conserver la diluabilité.

Le tableau 3 regroupe les résultats obtenus avec des exemples d'encollage réalisés à partir de résines selon l'invention, et avec d'autres exemples réalisés à partir de résines qui n'entrent pas dans le cadre de l'invention.

Les exemples 12 à 14 sont réalisés à partir de résines décrites dans les exemples 1, 4 et 5 ci-dessus. Les exemples 15 et 16 correspondent aux résines décrites dans les exemples 7 et 10 ci-dessus et qui n'entrent donc pas dans le cadre de l'invention.

Tous les exemples réalisés contiennent les mêmes quantités d'huile minérale, d'ammoniaque en solution à 20 %, de silane et de sulfate d'ammonium. Ce sont 0,1 % de silane, 9,5 % d'huile minérale, 6 % d'ammoniaque, 3 % de sulfate d'ammonium. Les pourcentages exprimés correspondent à 100 parts de l'ensemble résine et urée supplémentaire.

Outre les quantités de formaldéhyde libre (Fl %) et de phénol libre (Pl %), exprimées par leur teneur en matière sèche dans l'encollage, le tableau 3 indique également les quantités de ces éléments, exprimées en mg/Nm$^3$, que l'on retrouve dans les gaz évacués. Les normes allemandes, notamment, exigent que la quantité totale de polluants soit inférieure à 20 mg/Nm$^3$. Il apparaît clairement que les exemples conformes à l'invention répondent à ces normes. La diluabilité mesurée après trois jours de stockage de l'encollage est encore satisfaisante. En outre, la quantité de liant fixée par les fibres de verre par exemple, lorsque l'on pulvérise dessus une composition d'encollage selon l'invention, se trouve augmentée, du fait de la réduction des phénol et formaldéhyde libres.

TABLEAU 1 : DONNEES

| Ex. | F/P | cata-lyseur | OH-/P | Taux conversion. Formol avant urée | tU : Moment et température de début introduction urée | Fl à tU | U/Fl à Tu | U/P |
|---|---|---|---|---|---|---|---|---|
| N° | mole/mole | | mole OH /100 moles P. | % | | mole/mole | mole/mole | mole/mole |
| 1 | 3,5 | NaOH | 14,1 | 69 | En fin de palier après 71 min. à 70°C | 8,4 | 1,08 | 1,18 |
| 2 | 4 | NaOH | 14,1 | 52 | Au cours du refroidissement après 90 min à 70°C et 8 min de refroidissement (70 à 60°C) | 10,4 | 0,71 | 1,06 |
| 3 | 3,5 | NaOH | 18,9 | 70 | En fin de palier après 70 min. à 70°C | 8,0 | 1,08 | 1,18 |
| 4 | 3,5 | NaOH | 14,1 | 69 | En fin de palier après 71 min à 70°C | 8,3 | 0,725 | 0,78 |
| 5 | 3,5 | NaOH | 14,6 | 69 | En fin de palier après 71 min à 70°C | 8,3 | 0,363 | 0,39 |
| 6 | 5 | NaOH | 18,9 | 44 | En fin de palier après 62 min à 70°C | 13,8 | 0,725 | 1,22 |
| 7 | 3,5 | NaOH | 14,5 | 69 | --- | - | - | 0 |
| 8 | 2,3 | NaOH | 8.5 | 79 | --- | - | - | 0 |
| 9 | 6 | NaOH | 14,1 | 43 | --- | - | - | 0 |
| 10 | 3,2 | Ba(OH)2 | 9,2 | 73 | --- | - | - | 0 |
| 11 | 3,2 | Ba(OH)2 | 9,2 | 71 | Au cours du palier après 78 min à 70°C | 7,6 | 0,921 | 0,86 |

EP 0 148 050 B1

## TABLEAU 2 : RESULTATS

| Ex. n° | Flf % | Plf % | Extrait sec % | Aspect | Diluabi-lité % | Pc % | Fc % | pH |
|---|---|---|---|---|---|---|---|---|
| 1 | 0,28 | 0,4 | 44,3 | limpide | 2 000 | 98,1 | 98,5 | |
| 2 | 1,28 | 0,18 | 46,4 | limpide | 2 000 | 98,9 | 94 | |
| 3 | 0,28 | 0,28 | 44,7 | limpide | 2 000 | 98,5 | 98,5 | |
| 4 | 1,12 | 0,5 | 43 | limpide | 2 000 | 98 | 97 | |
| 5 | 2,9 | 0,5 | 40 | limpide | 2 000 | 98 | 90 | |
| 6 | 0,6 | 0,06 | 43,5 | limpide | 2 000 | 99,6 | 97 | 7,1 à 7,3 |
| 7 | 7,35 | 0,41 | 34 | limpide | 2 000 | 98 | 70 | |
| 8 | 3,2 | 3,5 | 41 | limpide | 1 000 | 88 | 85 | |
| 9 | 16,3 | 0,13 | 35 | laiteux | 2 000 | 99,4 | 43 | |
| 10 | 6,6 | 1 | 37,6 | laiteux | 2 000 | 95,8 | 73 | |
| 11 | 0,35 | 0,8 | 46 | laiteux | 2 000 | 95,8 | 97,6 | |

EP 0 148 050 B1

TABLEAU 3

| Exemple | Exemple de résine correspondant | Parts de résine | Parts d'urée supplémentaire | Fl % | Pl % | Pollution mg/Nm³ | | | Diluabilité à 20°C % |
|---|---|---|---|---|---|---|---|---|---|
| | | | | | | Pl | Fl | Total | |
| 12 | 1 | 80 | 20 | 1,6 | 0,4 | 6,8 | 5,6 | 12,4 | 1200 |
| 13 | 4 | 80 | 20 | 1,15 | 0,6 | 7,6 | 5,5 | 13,1 | 700 |
| 14 | 5 | 80 | 20 | 3,7 | 0,5 | 5,8 | 7,4 | 13,2 | 300 |
| 15 | 7 | 55 | 45 | 11 | 0,25 | 6,1 | 14,2 | 20,3 | 600 |
| 16 | 10 | 55 | 45 | 10,4 | 1,7 | 23 | 13 | 36 | 0 |

**Revendications**

1. Résine sous forme liquide, destinée à être utilisée dans une composition d'encollage pour fibres minérales, constituée essentiellement de condensats de phénol-formaldehyde et d'urée-formaldehyde, présentant un taux de phénol libre et de formaidehyde libre respectivement inférieur à 0,5 % et 3 %, une diluabilité à l'eau, mesurée à 20° C, au moins égale à 1000 % et une teneur en extrait sec au moins égale à 40 %, cette résine résultant de la condensation

de formaldehyde et de phénol utilisés dans un rapport molaire compris entre 3 et 6, en présence d'un catalyseur basique en quantité correspondant à 12 à 20 moles OH⁻ pour 100 moles de phénol initial, à une température comprise entre 60° C et 75° C, de préférence à 70° C environ, jusqu'à l'obtention d'un taux de conversion du phénol supérieur à 98 %, et au plus pendant une durée n'excédant pas 90 mn, puis du refroidissement du milieu réactionnel à une vitesse de l'ordre de 1° C/mn jusqu'à 35° C environ, et de la condensation du formaldehyde en excès avec de l'urée ajoutée en quantité telle que le rapport molaire U/P soit compris entre (F/P - 2,55) / 2,6 et (F/P - 2,55) / 0,7 et de préférence entre (F/P - 2,55) / 1,8 et (F/P - 2,55) / 0,8, l'introduction de l'urée ayant lieu progressivement, au cours du refroidissement, en une durée au moins égale à la moitié de la durée du refroidissement du milieu réactionnel.

2. Produit selon la revendication 1, caractérisé en ce qu'il présente un taux de phénol libre inférieur à 0,4 %, un taux de formaldehyde libre inférieur à 0,3 % et une diluabilité à l'eau mesurée à 20° C au moins égale à 2000%.

3. Produit selon la revendication 1 ou la revendication 2, caractérisé en ce que le catalyseur est la soude, à raison de 5 à 8.5 % en poids de phénol initial.

4. Procédé de préparation d'une résine sous forme liquide, destinée à être utilisée dans une composition d'encollage pour Fibres minérales, constituée essentiellement de condensats de phénol-formaldehyde et d'urée-formal présentant un taux de phénol libre et de formaldehyde libre exprimé en poids total de liquide, respectivement inférieur à 0,5 % et à 3 %, une diluabilité à l'eau, mesurée à 20° C, au moins égale à 1000 % et une teneur en extrait sec au moins égale à 40 %, ce procédé consistant à faire réagir du formol et du phénol dans un rapport molaire compris entre 3 et 6, en présence d'un catalyseur basique utilisé en quantité correspondant à 12 à 20 moles OH⁻ pour 100 moles de phénol initial, à une température comprise entre 60° C et 75° C, de préférence à 70° C environ jusqu'à l'obtention d'un taux de conversion du phénol supérieur à 98 %, et au plus pendant une durée n'excédant pas 90 mn, puis à refroidir le milieu réactionnel à une vitesse de l'ordre de 1° C/mn jusqu'à 35° C environ, et à faire réagir le formaldehyde en excès avec de l'urée ajoutée en quantité telle que le rapport molaire U/P soit compris entre (F/P - 2,55) / 2,6 et (F/P - 2,55) / 0,7 et de préférence entre (F/P - 2,55) / 1,8 et (F/P - 2,55) / 0,8, l'introduction de l'urée ayant lieu progressivement, au cours du refroidissement, en une durée au moins égale à la moitié de la durée du refroidissement du milieu réactionnel.

5. Procédé selon la revendication 4, caractérisé en ce que l'on introduit l'urée dès le début du refroidissement.

6. Procédé selon l'une des revendications 4 et 5, caractérisé en ce qu'il est mis en oeuvre suivant un cycle de température comprenant une phase de chauffage, un palier et une phase de refroidissement, la durée du palier n'excédant pas 90 minutes.

7. Composition d'encollage à base d'un produit de condensation de phénol, de formaldehyde et d'urée, et destinée à l'encollage de fibres de verre, comprenant également des additifs d'encollage et de l'urée supplémentaire, caractérisée en ce que le produit de condensation est celui de l'une des revendications 1 à 3.

8. Composition d'encollage selon la revendication 7, caractérisée en ce que les proportions de la résine de condensation, comptées en parts de matière sèche, et de l'urée supplémentaire sont comprises entre 65 parts de résine de condensation pour 35 parts d'urée supplémentaire et 90 parts pour 10 parts, et de préférence ces proportions sont de 80 parts de résine de condensation pour 20 parts d'urée supplémentaire.

9. Application de la composition d'encollage selon l'une des revendications 7 à 8, caractérisée en ce que la composition d'encollage est pulvérisée sur des fibres minérales, notamment pour la fabrication de produits d'isolation.

## Claims

1. A resin in liquid form intended for use in a composition for gluing mineral fibres and consisting essentially of phenol-formaldehyde and urea-formaldehyde condensates, having a level of free phenol and free formaldehyde respectively below 0.5% and 3%, a dilutability in water, measured at 20°C, at least equal to 1000% and a dry extract content at least equal to 40%, this resin resulting from the condensation of formaldehyde and phenol used in a molar ratio of between 3 and 6, in the presence of a basic oatalyst in a quantity corresponding to 12 to 20 mols OH⁻ per 100 mols of initial phenol, at a temperature comprised between 60°C and 75°C and preferably approx. 70°C, until a phenol conversion rate in excess of 98% is obtained and at most for a period which does not exceed 90 minutes, then cooling of the reaction medium at a rate of around 1°C per minute down to approx. 35°C and condensation of the formaldehyde in excess with added urea in such a quantity that the molar ratio U:P is comprised between (F/P - 2.55) / 2.6 and (F/P - 2.55) / 0.7 and preferably between (F/P - 2.55) / 1.8 and (F/P - 2.55) / 0.8, the urea being introduced progressively during the course of cooling over a period at least equal to half the cooling time of the reaction medium.

2. A product according to Claim 1, characterised in that the free phenol level is below 0.4%, the free formaldehyde level is below 0.3% while its dilutability in water measured at 20°C is at least equal to 2000%.

3. A product according to Claim 1 or Claim 2, characterised in that the catalyst is soda at the rate of 5 to 8.5% by weight of initial phenol.

4. A method of preparing a resin in liquid form intended for use in a composition for gluing mineral fibres and consisting essentially of phenol-formaldehyde and urea-formaldehyde condensates, having a level of free phenol and free formaldehyde respectively below 0.5% and 3%, a dilutability in water, measured at 20°C, at least equal to 1000% and a dry extract content at least equal to 40%, this resin resulting from the condensation of formaldehyde and phenol used in a motor ratio of between 3 and 6, in the presence of a basic catalyst in a quantity corresponding to 12 to 20 mole OH⁻ per 100 mole of initial phenol, at a temperature comprised between 60°C and 75°C and preferably approx. 70°C, until a phenol conversion rate in excess of 98% is obtained and at most for a period which does not exceed 90 minutes, than cooling of the reaction medium at a rate of around 1°C per minute down to approx. 35°C and condensation of the formaldehyde in excess with added urea in such a quantity that the molar ratio U:P is comprised between (F/P - 2.55) / 2.6 and (F/P - 2.55) / 0.7 and preferably between (F/P - 2.55) / 1.8 and (F/P - 2.55) / 0.8, the urea being introduced progressively during the course of cooling over a period at least equal to half the cooling time of the reaction medium.

5. A method according to Claim 4, characterised in that the urea is introduced at the commencement of cooling.

6. A method according to one of Claims 4 and 5, characterised in that it is carried out in accordance with a temperature cycle comprising a heating phase, a plateau and a cooling phase, the duration of the plateau not exceeding 90 minutes.

7. A gluing composition based on a product of condensation of phenol, formaldehyde and urea and intended for gluing glass fibres, likewise comprising gluing additives and additional urea, characterised in that the product of condensation is that according to one of Claims 1 to 3.

8. A gluing composition according to claim 7, characterised in that the proportions of condensation resin counted as parts of dry matter, and additional urea are comprised between 65 parts condensation resin to 35 parts supplementary urea and 90 parts per 10 parts and preferably these proportions are 80 parts condensation resin per 20 parts supplementary urea.

9. Application of the gluing composition according to one of Claims 7 to 8, characterised in that the gluing composition is sprayed onto mineral fibres, particularly for the manufacture of insulating products.

## Patentansprüche

EP 0 148 050 B1

1. Flüssiges Harz zur Verwendung in einem Bindemittel für Mineralfasern, das im wesentlichen aus Phenol-Formaldehyd- und Harnstoff-Formaldehyd-Kondensaten besteht, einen Gehalt an freiem Phenol bzw. an freiem Formaldehyd unter 0,5 % bzw. 3 %, eine Verdünnbarkeit mit Wasser, gemessen bei 20° C, von mindestens 1000 % und einen Gehalt an Trockenmasse von mindestens 40 % besitzt, wobei dieses Harz ein Produkt der Kondensation von Formaldehyd und Phenol, die in einem molaren Verhältnis von 3 bis 6 verwendet werden, in Gegenwart eines basischen Katalysators in einem Menge, die 12 bis 20 Mol OH⁻ je 100 Mol eingesetztem Phenol entspricht, bei einer Temperatur von 60 bis 75 °C, vorzugsweise bei etwa 70° C, bis zu einem Umsetzungsgrad des Phenols über 98 % und höchstens während einer Zeitdauer, die 90 min nicht überschreitet, mit folgender Abkühlung des Reaktionsmilieus bei einer Geschwindigkeit in der Größenordnung von 1° C/min bis auf etwa 35° C, und der Kondensation des überschüssigen Formaldehyds mit dem Harnstoff ist, der in einer solchen Menge zugesetzt ist, daß das molare Verhältnis U/P von (F/P -2,55)/2,6 bis (F/P -2,55)/0,7 und vorzugsweise von (F/P -2,55)/1,8 bis (F/P -2,55)/0,8 beträgt, wobei der Eintrag von Harnstoff fortschreitend im Verlauf der Abkühlung während einer Dauer stattfindet, die wenigstens gleich der Hälfte der Abkühlungsdauer des Reaktionsmilieus ist.

2. Produkt nach Anspruch 1, dadurch gekennzeichnet, daß es eine Menge von freiem Phenol unter 0,4 %, eine Menge von freiem Formaldehyd unter 0,3 % und eine Verdünnbarkeit mit Wasser, gemessen bei 20° C, von wenigstens 2000 % besitzt.

3. Produkt nach Anspruch 1 oder 2, dadurch gekennzeichnet, daß der Katalysator Soda in einer Menge von 5 bis 8,5 Gew.-% des eingesetzten Phenols ist.

4. Verfahren zur Herstellung eines Harzes in flüssiger Form, bestimmt zur Verwendung als ein Bindemittel für Mineralfasern und im wesentlichen aus Phenol-Formaldehyd- und Harnstoff-Formaldehyd-Kondensaten bestehend, die einen Gehalt an freiem Phenol bzw. an freiem Formaldehyd, ausgedrückt als Gesamtgewicht der Flüssigkeit, von unter 0,5 % bzw. unter 3 %, eine Verdünnbarkeit mit Wasser, gemessen bei 20° C, von mindestens 1000 % und einen Gehalt an Trockenextrakt von wenigstens 40 % besitzt, wobei das Verfahren darin besteht, daß man Formaldehyd und Phenol in einem molaren Verhältnis von 3 bis 6 in Gegenwart eines basischen Katalysators, der in einer Menge eingesetzt wird, die 12 bis 20 Mol OH⁻ auf 100 Mol eingesetztem Phenol entspricht, bei einer Temperatur von 60 bis 75° C, vorzugsweise etwa 70° C, bis zur Erreichung eines Grads der Umsetzung des Phenols über 98 % und höchstens während einer Dauer, die 90 min nicht überschreitet, reagieren läßt, anschließend das Reaktionsgemisch bei einer Geschwindigkeit in der Größenordnung von 1° C/min bis auf etwa 35° C abkühlt und den überschüssigen Formaldehyd mit dem Harnstoff umsetzt, der in einer solchen Menge zugesetzt ist, daß das molare Verhältnis U/P von (F/P -2,55)/2,6 bis (F/P -2,55)/0,7 und vorzugsweise von (F/P -2,55)/1,8 bis (F/P -2,55)/0,8 beträgt, wobei der Eintrag des Harnstoffs fortschreitend im Verlauf der Abkühlung während einer Dauer stattfindet, die wenigstens gleich der Hälfte der Dauer der Abkühlung des Reaktionsgemisches beträgt.

5. Verfahren nach Anspruch 4, dadurch gekennzeichnet, daß man den Harnstoff vom Beginn des Abkühlens einträgt.

6. Verfahren nach einem der Ansprüche 4 und 5, dadurch gekennzeichnet, daß es durchgeführt wird während eines Temperaturzyklus', der eine Heizphase, einen Absatz (Ruhephase) und eine Abkühlphase umfaßt, wobei die Dauer des Absatzes (der Ruhephase) 90 min nicht überschreitet.

7. Bindemittel auf Basis eines Kondensationsproduktes von Phenol, Formaldehyd und Harnstoff zum Binden von Glasfasern, das auch Bindemittelzusätze und ergänzenden Harnstoff enthält, dadurch gekennzeichnet, daß das Kondensationsprodukt dasjenige nach einem der Ansprüche 1 bis 3 ist.

8. Bindemittel nach Anspruch 7, dadurch gekennzeichnet, daß die Anteile des Kondensationaharzes, gerechnet als Teile der Trockenmasse, und des zusätzlichen Harnstoffs von 65 Teilen Kondensationsharz auf 35 Teile zusätzlichen Harnstoff bin 90 Teile auf 10 Teile betragen, und vorzugsweise diese Anteile 80 Teile Kondensationsharz auf 20 Teile zusätzlichen Harnstoff sind.

9. Anwendung des Bindemittels nach einem der Ansprüche 7 bis 8, dadurch gekennzeichnet, daß das Bindemittel auf die Mineralfasern aufgesprüht wird, insbesondere zur Herstellung von Isolationsproduk-

13

ten.